Europäisches Patentamt

European Patent Office

Office européen des brevets

(19)

(11) Publication number: **0 315 708**
**A1**

# EUROPEAN PATENT APPLICATION

(21) Application number: 87116533.8

(22) Date of filing: 09.11.87

(51) Int. Cl.4: **C08J 5/18** , **H01B 3/44** , **H01G 4/18**

(43) Date of publication of application:
17.05.89 Bulletin 89/20

(84) Designated Contracting States:
**DE FR GB IT SE**

(71) Applicant: **PENNWALT CORPORATION**
**Pennwalt Building Three Parkway**
**Philadelphia Pennsylvania 19102(US)**

(72) Inventor: **Wempe, Lawrence Kyran**
**R.D. Nr. 1, Box 284**
**Center Valley, PA 18034(US)**
Inventor: **Bloomfield, Philip Earl**
**21 West Dartmouth Rd.**
**Bala Cynwyd, PA 19004(US)**
Inventor: **Wickwire, Dean Hedge**
**R.D. Nr. 1, Box 384**
**Glen Moore, PA 19343(US)**

(74) Representative: **Kraus, Walter, Dr. et al**
**Patentanwälte Kraus, Weisert & Partner**
**Thomas-Wimmer-Ring 15**
**D-8000 München 22(DE)**

(54) A dielectric film of a copolymer of vinylidene fluoride and tetrafluoroethylene.

(57) A dielectric film of a molecularly oriented copolymer of vinylidene fluoride and tetrafluoroethylene, a process of preparing such film and a capacitor produced from such film are disclosed herein.

EP 0 315 708 A1

# A Dielectric Film of a Copolymer of Vinylidene Fluoride and Tetrafluoroethylene IR-2828

## BACKGROUND OF THE INVENTION

This invention relates to a film of a copolymer of vinylidene fluoride and tetrafluoroethylene which demonstrates a high dielectric constant and good dielectric strength. More particularly, it relates to a molecularly oriented film of a copolymer of at least about 85 weight % of vinylidene fluoride and at least about 3 weight % of tetrafluoroethylene. In addition, this invention relates to the process of preparing such dielectric and capacitors utilizing it.

## STATEMENT OF THE INVENTION

This invention is a dielectric comprising a molecularly oriented film of a copolymer of at least about 85 weight % of vinylidene fluoride and at least about 3 weight % of tetrafluoroethylene based on the weight of said copolymer, said film having a dielectric constant at 100 Hz of at least 10 and a dielectric strength of at least about 400 volts per micron ($\mu$m) of film thickness.

The process for preparing the dielectric comprises forming a nonfibrous sheet of a copolymer of at least about 85 weight % of vinylidene fluoride and at least about 3 weight % of tetrafluoroethylene based on the weight of the copolymer, molecularly orienting said sheet by elongating it in at least one direction relative to a major dimension thereof to thereby produce a film having a thickness of no greater than about 75 microns and a dielectric constant at 100 Hz of at least 10.

## Detailed Description of Invention

The dielectric of this invention is a molecularly oriented copolymer film of vinylidene fluoride and tetrafluoroethylene. The weight range of vinylidene fluoride in the copolymer is from about 85 to 97 % while the range of tetrafluoroethylene in the copolymer is from about 3 to 15%. It is preferable, from the standpoint of improved dielectric properties that the vinylidene fluoride content of the copolymer be from about 88 to 94 % while the tetrafluoro ethylene content should be about 12 to 6 %. While it is preferred that the copolymer consist of only vinylidene fluoride and tetrafluoroethylene monomers, small proportions of other copolymerizable monomers, preferably fluorine-containing ethylenically unsaturated monomers, may be included.

The copolymers are formed by any convenient polymerization procedure including emulsion, suspension and solvent polymerization techniques. Emulsion and suspension polymersion procedures are preferred. The procedure detailed in U.S. Patent No. 4,360,652 is most preferred.

The copolymer film is prepared by first fabricating preformed sheets by solvent casting, melt extrusion, injection molding, pressing or calendaring. Such techniques are well known and need not be specifically described here. The preformed sheets are of any thickness which will permit molecular orientation of the sheets by elongation in at least one major dimension into films of the desired thickness. Typically, the preform sheets have thicknesses ranging between about 45 and 200 microns.

In accordance with the process of this invention, the sheets are molecularly oriented, for example, by stretching, rolling or blowing, to provide film of improved dielectric properties. The techniques of molecular orientation of polymer film are well known and need not be specifically discussed here. An example of the stretch orientation of polyvinylidene fluoride film may be found, for example, in U.S. Patent No. 3,197,538. The teaching of this patent may be extended to the copolymer films of this invention. The fabricated copolymer sheets are oriented uniaxially or biaxially to provide the desired improvement in dielectric properties. The orientation ration will range from about 2:1 to about 10:1 for both uniaxial orientation and biaxial orientation but the preferred orientation range is from about 4:1 to about 5:1 whether orientation is in one direction or both. That is, for example, if biaxial orientation is accomplished by stretching, the film is preferably stretched from 4 to 5 times in the machine direction and then from 4 to 5 times in the transverse direction.

After orientation, the film will have a thickness range extending up to about 75 microns but preferably no greater than about 13-15 microns.

## EXAMPLE

A copolymer resin for this invention is typically made as follows:

A horizontal stainless steel autoclave equipped with a stirrer is charged with water and the ammonium salt of a perfluorooctanoate as an emulsifier. Vinylidene fluoride monomer and tetrafluoroethylene monomer in the required molar proportions are added to the pressurized autoclave after purging with nitrogen. The reactor is heated to the reaction temperature and the reactants are agitated. A chain transfer agent may be added at any appropriate stage of the reaction. Monomers, in the required molar proportions are continuously fed into the reactor along with an initiator and chain transfer agent, if desired. Each monomer's pressure is maintained constant throughout the reaction. Upon completion of the reaction (effective initiator depletion), the reactor contents are cooled and the latex product drained from the reactor. The latex is concentrated and the copolymer resin recovered for use in the fabrication of a resinous sheet.

The resin is formed into a sheet by extrusion and the sheet subjected to molecular orientation by stretching to provide a continuous film of a thickness of about 12 microns. One fabricated sheet of a copolymer of 90 weight % vinylidene fluoride and 10 weight % tetrafluoroethylene is unixally oriented at a ratio of about 3.8 to 1 to form the 12 micron thick film and another fabricated sheet of the same monomer content having a greater initial thickness is biaxially oriented at a machine direction stretch ratio of about 3.5 to 1 and then at a transverse stretch ratio of about 3.9 to 1 to also form a 12 micron thick film. The temperature at which the films were stretched was 100°C for machine direction stretch and 140°C for transverse direction stretch.

The films were tested for dielectric properties and the results are reported in the following table.

Table

| Film | Dielectric Properties[3] | | Strength (12μm) |
|---|---|---|---|
| | Constant (100Hz) | Loss (100Hz) | |
| 1) Homopolymer[1]- unoriented | 10.2 | 0.014 | - |
| 2) Homopolymer - uniaxially oriented | 10.3 | 0.014 | - |
| 3) Homopolymer - biaxially oriented | 10.3 | 0.014 | - |
| 4) Copolymers[2]- unoriented | 10.9 | 0.014 | 520 V/μm |
| 5) Copolymer - uniaxially oriented | 14.2 | 0.012 | 548 V/μm |
| 6) Copolymer - biaxially oriented | 13.7 | 0.013 | 570 V/μm |

1. - vinylidene fluoride homopolymer resin film
2. - a resinous film of a copolymer of 90 wt. % vinylidene fluoride and 10 wt. % tetrafluoroethylene
3. - at room temperature (23°C)

The data of the above table show that the vinylidene fluoride-tetrafluoroethylene copolymer film of this invention is unexpectedly more amenable than the film of vinylidene fluoride homopolymer to the process conditions of molecular orientation whereby the dielectric constant is improved when the film is subjected to conditions developed in heat stretch orientation.

Further, the dielectric film of this invention when compared to the homopolymer film has less loss of dielectric constant in thermocycling of the film as would ordinarily occur when used in capacitor applications.

Still further, the film of this invention has less elevation in dielectric loss with increase in temperature than the homopolymer film.

While both the homopolymer and the copolymer film both retain physical stability when heat annealed, the copolymer has better dielectric constant stability.

The copolymer film of this invention may be heat annealed to provide dimensional stability at elevated temperatures. For example, the film may be annealed by holding it under tension on all sides while subjecting it to a temperature of from about 120 to 175°C and then allowing the film to cool while maintaining it under tension.

For use in a capacitor, the film is typically coated, for example by vapor deposition, with an electroconductive coating, for example, silver, copper, aluminum, chromium, zinc, tin, nickel or other conductive material. Other methods of applying the coating are, for example, electroplating, spray painting, sputtering, laminating and the like. Electrode foils and dielectric film may also be wound to form the capacitor. Method and materials for the manufacture of capacitors are well known and can be used with the film of this invention without specific instructions to those skilled in this art. The coated film, having conductive leads extending from the electroconductive coating or layer may be rolled into a capacitor.

## Claims

1. A dielectric comprising a molecularly oriented film of a copolymer of at least about 85% by weight of said copolymer of vinylidene fluoride and at least about 3 % by weight of said copolymer of tetrafluoroethylene, said film having a dielectric constant at 100 Hz and at room temperature of at least 10 and a dielectric strength of at least about 400 volts per micron of film thickness.

2. The dielectric of Claim 1 wherein the copolymer is from about 88 to 94 weight % of vinylidene fluoride and from about 6 to 12 weight % of tetrafluoroethylene.

3. The dielectric of Claim 1 wherein the film has a thickness of no greater than about 15 microns.

4. A process for preparing a dielectric which comprises forming a nonfibrous sheet of a copolymer of at least about 85 % by weight of said copolymer of vinylidene fluoride and at least about 3% by weight of said copolymer of tetrafluoroethylene, molecularly orienting said sheet by elongating it in at least one direction relative to a major dimension thereof to thereby produce a film having a thickness of no greater than about 75 microns, a dielectric constant at 100 Hz and at room temperature of at least 10 and a dielectric strength of at least 400 volts per micron of film thickness.

5. The process of Claim 4 wherein the copolymer is from about 88 to 94% by weight of vinylidene fluoride and about 6 to 12 % by weight of tetrafluoroethylene.

6. The process of Claim 4 wherein the molecular orientation of the film in at least one direction is at an elongation ratio ranging from about 4 to about 5.

7. The process of Claim 6 wherein the molecular orientation is uniaxial orientation by heat stretching.

8. The process of Claim 6 wherein the molecular orientation is biaxial orientation by heat stretching.

9. The process of claim 4 wherein the film is heat annealed after orientation.

10. A capacitor comprising the dielectric of Claim 1.

11. The capacitor of Claim 11 and an electroconductive coating or foil.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | GB-A-2 027 039 (KUREHA) <br> * Claims 1-5,8,10-11; page 1, lines 46-51; page 4, lines 27-31 * <br> --- | 1 | C 08 J 5/18 <br> H 01 B 3/44 <br> H 01 G 4/18 |
| X | FR-A-2 146 856 (KUREHA) <br> * Page 5, lines 1-11; page 9, example 5; claims * <br> ----- | 1 | |

TECHNICAL FIELDS SEARCHED (Int. Cl.4)

C 08 J
H 01 B
H 01 G

The present search report has been drawn up for all claims

| Place of search | Date of completion of the search | Examiner |
|---|---|---|
| THE HAGUE | 29-08-1988 | STIENON P.M.E. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)